# EUROPÄISCHE PATENTSCHRIFT

(11) **EP 0 829 122 B1**
(45) Veröffentlichungstag und Bekanntmachung des Hinweises auf die Patenterteilung: **25.08.1999**
(21) Anmeldenummer: 96919620.3
(22) Anmeldetag: 31.05.1996
(51) Int. Cl.: H02G 7/06, G02B 6/48, H02G 1/02

(54) **VERFAHREN ZUR INSTALLATION EINES LICHTWELLENLEITER-KABELS AN EINEM SEIL EINER HOCHSPANNUNGSFREILEITUNG**
METHOD OF FITTING AN OPTICAL-FIBRE CABLE ON A POWER TRANSMISSION LINE CABLE
PROCEDE D'INSTALLATION D'UN CABLE A FIBRES OPTIQUES SUR LE CABLE D'UNE LIGNE DE TRANSPORT DE COURANT H.T.

(30) Priorität: 02.06.1995 DE 19520382; 12.04.1996 DE 19614509
(43) Veröffentlichungstag der Anmeldung: 18.03.1998
(73) Patentinhaber: SIEMENS AKTIENGESELLSCHAFT, 80333 München (DE)
(72) Erfinder: EINSLE, Günter, D-81479 München (DE); MAYR, Ernst, D-82319 Starnberg (DE)
(86) Internationale Anmeldenummer: DE9600958
(87) Internationale Veröffentlichungsnummer: WO9638892

(56) Entgegenhaltungen:
- DD-A- 263 838
- DE-A- 3 106 207
- DE-A- 3 228 239
- DE-A- 3 702 781
- US-A- 3 474 183
- US-A- 3 772 451
- US-A- 4 262 169

## Beschreibung

Die Erfindung betrifft ein Verfahren zur Installation eines Lichtwellenleiter-Kabels an einem Seil einer Hochspannungsfreileitung mit Hilfe von wendelförmig aufgebrachten Befestigungselementen.

Derzeit ist bekannt, daß ein Lichtwellenleiter-Kabel mit Hilfe eines spiralförmig aufgebrachten Bindedrahtes an einem Tragseil oder einem Erdungsseil einer Hochspannungsfreileitung angebunden wird. Hier wird wohl nur eine einfache Wickelmaschine und ein billiges Bindemittel verwendet, doch ergeben sich Nachteile, wenn das Bindemittel reißt. Bei einem solchen Riß springt die Spirale auf und das gesamte Lichtwellenleiter-Kabel fällt der Länge nach ab. Außerdem ergeben sich Schwierigkeiten durch verschiedene Ausdehnungen bei Temperaturänderungen, so daß eventuell Spannungen oder Einschnürungen entstehen können.

Eine weitere Möglichkeit besteht darin, daß das Lichtwellenleiter-Kabel spiralförmig um das Tragseil oder Erdungsseil herumgewickelt wird. Hier vereinfacht sich der Aufbringvorgang sogar noch, da keine Bindemittel benötigt werden, doch können nur relativ dünne Lichtwellenleiter-Kabel verwendet werden. Außerdem ist die Aufnahmekapazität für die Wickelmaschine sehr begrenzt, da die volle Länge Lichtwellenleiter-Kabel mitgeführt werden muß. Außerdem besteht die Gefahr, daß das aufgewickelte Lichtwellenleiter-Kabel durch die Girlandenbildung bei der Hochspannungsfreileitung jeweils zum tiefsten Punkt in einem Spannfeld wandert. Dadurch entstehen zusätzliche Zugkräfte an den Masten. Weiterhin ist bekannt, daß ein Lichtwellenleiter-Kabel mit Hilfe von Clips oder Laschen an einem Seil der Hochspannungsfreileitung oder am Erdungsseil angelascht wird. Hier ist jedoch nachteilig, daß eine sehr teure Verlegemaschine mit komplizierter Mechanik verwendet werden muß, wobei diese Maschine und die entsprechenden Halteelemente jeweils genau auf den Kabeldurchmesser abgestimmt werden müssen.

Derartige Verfahren sind bekannt aus den deutschen Offenlegungsschriften 31 06 207, 37 02 781 und aus der deutschen Patentschrift 32 28 239.

Aufgabe der Erfindung ist, ein einfaches Verfahren zum Installieren eines Lichtwellenleiter-Kabels an einem Seil einer Hochspannungsfreileitung zu finden, bei dem sich in der einfachsten Anlaschmethode durch Aufwickeln eines Befestigungselementes eine Sicherung gegen Abspringen beim Bruch eines Befestigungselementes gegeben ist. Die gestellte Aufgabe wird mit einem Verfahren der eingangs erläuterten Art dadurch gelöst, daß das entlang eines Seils der Hochspannungsfreileitung aufgezogene Lichtwellenleiter-Kabel mit Hilfe mindestens eines Klebebandes angelascht wird, wobei das Klebeband mit einer Wickelmaschine um das Seil und das Lichtwellenleiter-Kabel mit seiner nach innen weisenden Klebeseite aufgewendelt wird.

Die Vorteile des Verfahrens gemäß der Erfindung sind darin zu sehen, daß entlang eines vorhandenen Seils einer Hochspannungsleitung ein Lichtwellenleiter-Kabel in herkömmlicher einfacher Weise aufgezogen werden kann und daß es dann mit Hilfe einer ebenso einfachen Wickelmaschine mittels eines wendelförmig um das Seil und das Lichtwellenleiter-Kabel herumgeschlagenen Klebebandes befestigt werden kann. Durch die Klebung des Klebebandes auf der Einheit
Seil/Lichtwellenleiter-Kabel wird gewährleistet, daß eine gute Fixierung zustande kommt, so daß über die gesamte Länge des Spannfeldes hinweg gleiche Befestigungsverhältnisse vorliegen. Weiterhin ist sichergestellt, daß auch bei einem eventuell auftretenden Bruch eines Befestigungselementes keine Ablösung des Lichtwellenleiter-Kabels erfolgt, da vor und nach dem Bruch die feste Klebeverbindung zwischen dem Seil und dem Lichtwellenleiter-Kabel bestehen bleibt. Eine besonders sichere Befestigung ergibt sich, wenn zum Beispiel zwei Klebebänder im Kreuzschlag aufgebracht werden, da es hier dann zusätzlich an den Klebebandkreuzungsstellen zu einer weiteren definierten Verklebung zwischen den beiden Klebebändern kommt. Außerdem ist von Vorteil, daß bei derartigen Anordnungen fast jede übliche Kabeldurchmesserkombination möglich ist und daß auch keine Einschnürungen auftreten, wie dies bei Verwendung von Wickeldrähten der Fall sein kann.

Als Material für die vorzugsweise dielektrisch, d.h. isolierend aufgebauten Klebebänder kommen zum Beispiel besonders folgende Materialien in Frage:
- Fluorpolymer-Folien (z.B. "Teflon") beschichtet mit Silikonkleber der Firma Beiersdorf.
- Polyvinylfluorid-Folien (PVF) z.B. beschichtet mit Acrylatkleber der Firma 3M-Scotch.
- Polyesterfolien.

In den Folien können auch Verstärkungen z.B. aus Glasfasern oder Aramidfasern ("Kevlar") vorgesehen sein. Es ist auch möglich, die Verstärkungen gemischt zu verwenden, z.B. Kombinationen aus Glas- und Aramidfasern. Es ist auch möglich, zur Verbesserung der Zugfestigkeit Gewebebänder zu verwenden, z.B. aus Aramidfasern und/oder aus Glasfasern. Die faden- oder gewebeförmigen Verstärkungen können in einfacher Weise mit flüssigem Klebematerial getränkt werden, wodurch das fertige Klebeband entsteht. Beispielsweise können Aramid- oder Glasgewebebänder mit Silikonkleber der Firma Beiersdorf versehen werden.

Das vorstehend beschriebene Klebeband ist im Betrieb erheblichen mechanischen Beanspruchungen ausgesetzt. Einer Weiterbildung der Erfindung liegt deshalb die Aufgabe zugrunde, einen Weg aufzuzeigen, wie die mechanischen Eigenschaften des Klebebandes in einfacher Weise verbessert werden können. Diese Aufgabe wird dadurch gelöst, daß ein Klebeband aufgebracht wird, das zusätzlich mindestens eine Verstärkungsauflage aufweist.

Die Verstärkungsauflage verbessert die mechanischen Eigenschaften in dem gewünschten und notwendigen Maße. Die Aufbringung dieser Verstärkungsauflage erfolgt zweckmäßig nachträglich, d.h. sie wird auf das fertige Klebeband in einem weiteren Arbeitsgang aufgebracht. Besonders zweckmäßig wird die Verstärkungsauflage auf der Klebeschicht des Klebebandes aufgebracht, was eine einfache Lagesicherung ergibt. Darüber hinaus können gewerblich vorhandene und deshalb preiswerte Klebebänder als Ausgangsmaterialien verwendet werden, welche für die spezifischen Anforderungen der Anlaschung eines optischen Kabels lediglich mit der Verstärkungsauflage zu versehen sind.

Die Erfindung betrifft weiterhin eine Hochspannungsfreileitung mit einem an mindestens einem Leiterseil angelaschten optischen Kabel, welche dadurch gekennzeichnet ist, daß das optische Kabel durch Anlaschen mittels mindestens eines Klebebandes an dem Seil gehalten ist.

Die Erfindung wird anhand von Zeichnungen näher erläutert.
- Figur 1: zeigt den Stand der Technik, bei dem ein Bindedraht verwendet wird.
- Figur 2: zeigt den Stand der Technik, bei dem das Lichtwellenleiter-Kabel selbst um das Seil herumgeschlagen wird.
- Figur 3: zeigt den Stand der Technik, bei dem die Befestigung des Lichtwellenleiter-Kabels mit Hilfe von einzelnen Befestigungselementen vorgenommen wird.
- Figur 4: zeigt eine Anordnung wie sie nach dem erfindungsgemäßen Verfahren erstellt ist.
- Figuren 5 und 6: zeigen Ausführungsformen eines verbesserten Klebebandes.
- Figur 7: zeigt eine Fertigungslinie zur Herstellung eines Klebebandes nach den Figuren 5 und 6.

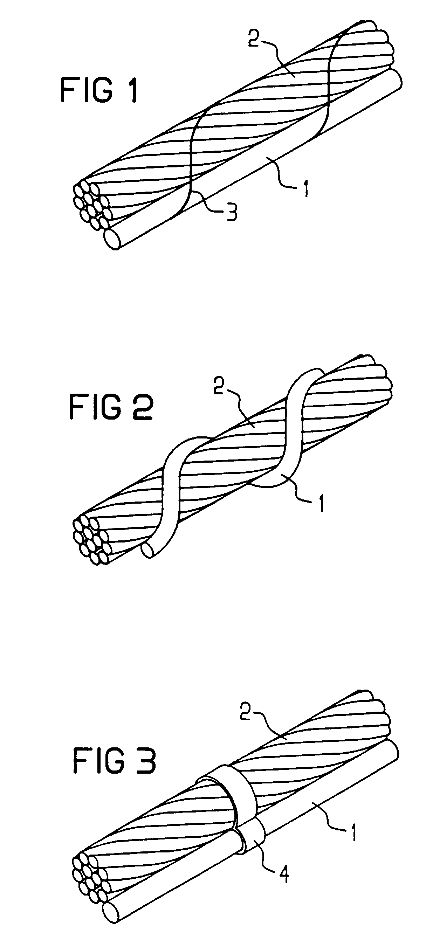

Die Figuren 1, 2 und 3 geben den Stand der Technik wieder, der entsprechend dieser Figuren bereits in der Einleitung gewürdigt ist.

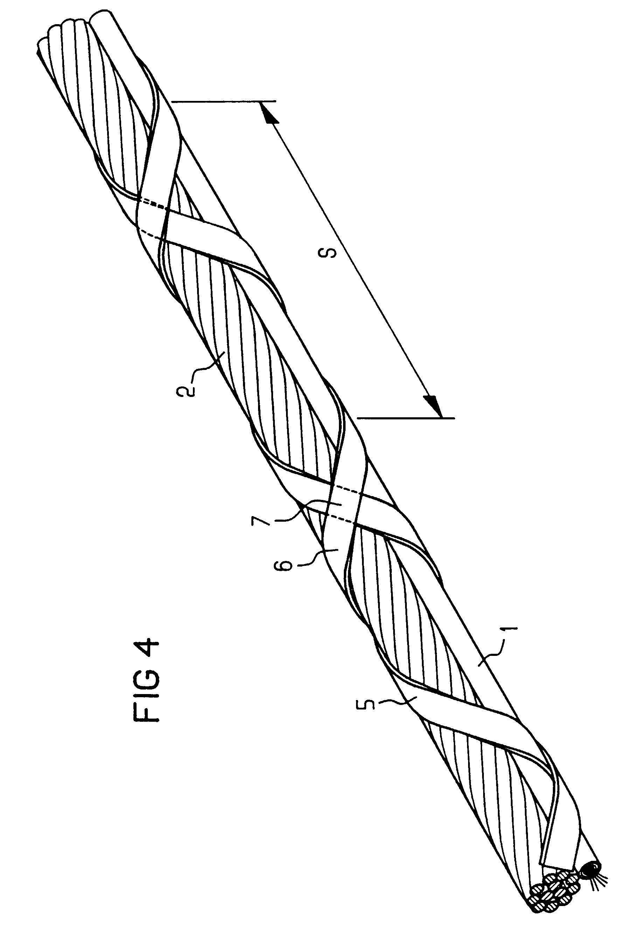

Die Figur 4 verdeutlicht die Anordnung zwischen dem Seil 2 (Erd- oder Phasenseil) einer Hochspannungsfreileitung und einem mit Klebebändern 5 und 6 angelaschten Lichtwellenleiter-Kabel 1, die nach dem erfindungsgemäßen Verfahren erstellt wurde. Nachdem das anzulaschende Lichtwellenleiter-Kabel 1 entlang eines Seiles 2, vorzugsweise eines Erdseils, einer Hochspannungsfreileitung aufgezogen ist, wird es mit Hilfe mindestens eines Klebebandes 5, 6 oder auch 5 und 6 angelascht, wobei dieser Vorgang mit einer an sich bekannten Wickelmaschine vorgenommen werden kann. Die Klebeseiten der Klebebänder 5 und 6 weisen dabei zum Seil 2 und zum Lichtwellenleiter-Kabel 1, so daß beide dadurch zueinander fixiert werden. Als vorteilhaft hat sich erwiesen, wenn die Schlaglänge S für das Aufbringen eines Kabelbandes 5 oder 6 zwischen 250 mm und 500 mm beträgt.

In dieser Figur ist weiterhin dargestellt, daß ein zweites Klebeband 6 aufgewendelt ist, wobei dieses zusammen mit dem ersten im Kreuzschlag verläuft, so daß es zusätzlich zur Haftung mit dem Seil 2 und dem Lichtwellenleiter-Kabel 1 in den Bandkreuzungsstellen 7 zu einer definierten Verklebung zwischen den beiden Klebebändern 5 und 6 kommt. Dies ergibt eine zusätzliche Fixierung der gesamten Einheit, besonders auch dann, wenn es bei einem der Klebebänder 5 oder 6 zu einem Bruch oder Riß kommen sollte.

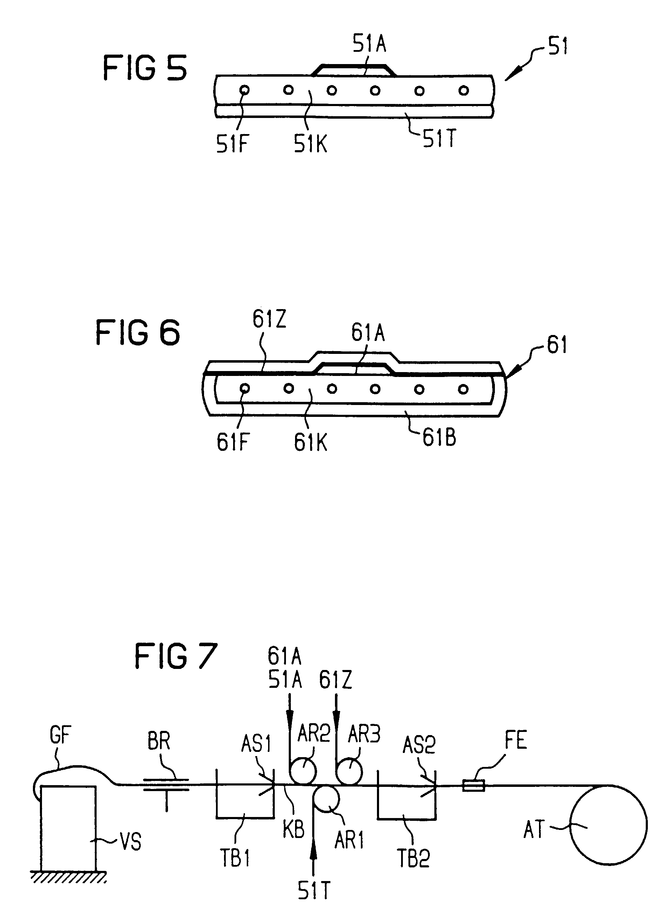

In Figur 5 ist ein Klebeband mit 51 bezeichnet, wobei das Klebeband bevorzugt aus Fäden oder einem reißfesten Gewebe besteht, das schematisch durch einzelne Fäden 51F angedeutet ist. Dieses Gewebe ergibt bereits eine hohe Zugfestigkeit und ist mit einem Klebstoff 51K getränkt, so daß ein selbstklebendes Band 51 gebildet wird. An der nicht zum Kleben benutzten Seite ist zweckmäßig eine folienartige Abdeckung 51T angebracht, damit das aufgespulte Band 51 leicht abgetrommelt werden kann. Zur Verdeutlichung ist in der Zeichnung viel mehr Klebematerial dargestellt, als notwendig; in Wirklichkeit genügt es meist, die Fäden oder das Gewebe 51F mit Klebematerial zu tränken.

Auf der klebenden (freien) und damit dem optischen Kabel zugekehrten Seite ist mindestens eine Verstärkungsauflage 51A vorgesehen, die vorteilhaft aus einer Vielzahl dünner, sehr zugfesten Fäden, Rovings oder aus einem Gewebe besteht. Bevorzugt werden hierfür Aramidfilamente verwendet, deren Zugfestigkeit entsprechend hoch ist. Allgemein ausgedrückt, sollte die Zugfestigkeit des für die Auflage 51A verwendeten Materials größer gewählt werden, als die des Klebebandes, vorzugsweise mindestens das drei- bis fünffache.

Die Verstärkungsauflage 51A wird vorteilhaft flach aufgebracht, beispielsweise dadurch, daß die Verstärkungsauflage aus mehreren Fäden besteht, die entsprechend flachgedrückt werden. Die Verstärkungsauflage 51A sollte zweckmäßig nur einen Teil, vorzugsweise zwischen 70% und 10%, insbesondere zwischen 10% und 20% der Klebefläche (Breitseite) des Klebebandes bedecken. Die Verstärkungsauflage 51A wird vorteilhaft etwa mittig, d.h. symmetrisch auf der klebenden Seite des Bandes 51 angebracht. Die Breite des Bandes 51 wird zweckmäßig zwischen 5 und 12 mm, vorzugsweise zwischen 6 und 8 mm gewählt. Die Dicke des Bandes 51 liegt vorteilhaft zwischen 0,05 und 1 mm, bevorzugte Werte liegen zwischen 0,1 und 0,2 mm.

In vielen Fällen kann es zweckmäßig sein, das Klebeband zu dessen besseren Schutz, insbesondere zur Verbesserung der UV-Lichtbeständigkeit mittels eines zusätzlichen Überzugs zu versehen. Ein Beispiel hierfür ist in Figur 6 dargestellt, wo ein Klebeband 61 außen mit einer Bitumenschicht 61B versehen ist. Dieses Klebeband 61 ist zweckmäßig analog zu dem Klebeband nach Figur 5 aufgebaut, d.h. es weist im Inneren ein Gewebe (angedeutet durch die Fäden 61F) auf, das mit einem klebenden Material 61K getränkt ist. Die Bitumenschicht 61B umschließt das Klebeband 61 zweckmäßig allseitig und überdeckt auch die ggf. vorhandene Verstärkungsauflage 61A. Um die Klebefähigkeit des Klebebandes 61 trotz der Bitumenbeschichtung zu gewährleisten, wird zweckmäßigerweise auf der später auf das optische Kabel und auf das Seil aufzubringende Seite eine Zwischenschicht 61Z in Form einer dünnen Folie aufgebracht, die zwischen der Klebeschicht 61K und der Bitumenschicht 61B liegt. Unmittelbar vor dem Anlaschen des optischen Kabels wird diese Zwischenschicht 61Z abgezogen und dadurch die klebende Fläche an der Oberseite des Klebebandes 61 freigelegt. Die so für das Anlaschen erhaltene Struktur gleicht dann der von Figur 5 lediglich mit dem Unterschied, daß an der Unterseite (d.h. im Betriebzustand an der Außenseite) des Klebebandes 61 noch die Bitumenschicht 61B vorhanden ist. Das Klebeband 51 oder 61 ist zweckmäßig nichtleitend (volldielektrisch) aufgebaut.

Für die Fäden oder das Gewebe 51F in Figur 5 oder 61F in Figur 6 werden bevorzugt Aramidfäden, insbesondere Aramidgarne und/oder Glasfilarmente, ggf. auch in Form von Rovings verwendet.

Die Klebematerialien entsprechend den Bezugszeichen 51K und 61K sollten zweckmäßig aus UV-beständigen Klebern bestehen, insbesondere aus solchen, die dauerelastisch bleiben und auch bei niedrigeren Temperaturen nicht verhärten oder verspröden. Bevorzugt wird als Klebstoff Polyisobutylen verwendet (z.B. "Oppanol").

Figur 7 zeigt eine Einrichtung zur Herstellung eines Bandes gemäß Figur 5 oder 6, wobei von einer Vorratsspule VS das faden- oder gewebeförmige Material GF abgezogen wird, das die zugfeste Einlage 51F oder 61F des Klebebandes, z.B. 51 oder 61 bildet. Dieses zugfeste Material durchläuft eine Bremseinrichtung BR und anschließend ein Tränkbad TB1, in dem es mit dem Klebematerial getränkt wird. Am Ausgang ist eine Abstreif- und ggf. Formeinrichtung AS1 vorgesehen, um überflüssiges Klebematerial zurückzuhalten und ggf. (bei Verwendung einzelner Fäden) dem Band die gewünschte Struktur zu geben. Nach einer ausreichenden Trocknung (z.B. mittels heißer Luft oder dergleichen) erreicht das Klebeband KB eine Andruckrolle AR1, mittels der die Schutzfolie 51T nach Fig. 5 aufgebracht wird. Auf der anderen Seite des Klebebandes KB wird mittels einer Andruckrolle AR2 die Verstärkungsauflage 51A bzw. 61A aufgebracht. Das so erhaltene Klebeband kann auf eine Trommel AT aufgetrommelt werden.

Falls eine Bitumentränkung durchgeführt werden soll, wird mittels einer Andruckrolle AR3 die zusätzliche Schutzfolie 61Z (vgl. Fig. 6) aufgebracht. Es wird dann von dem Klebeband KB noch ein zweites Tränkbecken TB2 durchlaufen, in dem ein flüssiges Bitumen vorgesehen ist. Dadurch kann die in Figur 6 dargestellte äußere Bitumenschicht 61B aufgebracht werden. Über einen weiteren Abstreifer AS2 wird überflüssiges Bitumenmaterial abgestreift, wobei mittels einer nachfolgenden Formeinrichtung FE ggf. das Klebeband seine endgültige Form erhält. Das so erhaltene Klebeband wird auf der Aufwickeltrommel AT aufgewickelt.

Anstelle einer Bitumenbeschichtung kann auch jedes andere Schutzmaterial aufgebracht werden, (z.B. Schutzlack o.dgl.).

## Patentansprüche

1. Verfahren zur Installation eines Lichtwellenleiter-Kabels (1) an einem Seil (2) einer Hochspannungsfreileitung mit Hilfe von wendelförmig aufgebrachten Befestigungselementen,
**dadurch gekennzeichnet**,
daß das entlang eines Seils (2) der Hochspannungsfreileitung aufgezogene Lichtwellenleiter-Kabel (1) mit Hilfe mindestens eines Klebebandes (5, 6) angelascht wird, wobei das Klebeband (5, 6) mit einer Wickelmaschine um das Seil (2) und das Lichtwellenleiter-Kabel (1) mit seiner nach innen weisenden Klebeseite aufgewendelt wird.

2. Verfahren nach Anspruch 1,
**dadurch gekennzeichnet**,
daß ein selbstklebendes Klebeband (5, 6) verwendet wird.

3. Verfahren nach einem der vorhergehenden Ansprüche,
**dadurch gekennzeichnet**,
daß ein Klebeband (5, 6) verwendet wird, das eine Fluorpolymer-Folie oder eine Polyvinylfluoridfolie aufweist.

4. Verfahren nach einem der vorhergehenden Ansprüche,
**dadurch gekennzeichnet**,
daß ein Klebeband (5, 6) verwendet wird, das mit Acrylat-Kleber oder mit Silikon-Kleber beschichtet ist.

5. Verfahren nach einem der vorhergehenden Ansprüche,
**dadurch gekennzeichnet**,
daß ein Klebeband (5, 6) verwendet wird, das Verstärkungen, insbesondere Glasfaser- und/oder Aramidfaser-Verstärkungen, aufweist.

6. Verfahren nach einem der vorhergehenden Ansprüche,
**dadurch gekennzeichnet**,
daß ein Gewebeband mit einer Beschichtung aus Klebematerial verwendet wird.

7. Verfahren nach einem der vorhergehenden Ansprüche,
**dadurch gekennzeichnet**,
daß zwei Klebebänder (5, 6) im Kreuzschlag aufgewendelt werden.

8. Verfahren nach einem der vorhergehenden Ansprüche,
**dadurch gekennzeichnet**,
daß das Klebeband (5, 6) mit einer Schlaglänge (S) von 250 bis 500 mm aufgewendelt wird.

9. Verfahren nach einem der vorhergehenden Ansprüche,
**dadurch gekennzeichnet**,
daß das Lichtwellenleiter-Kabel (1) am Erdseil (2) einer Hochspannungsfreileitung angelascht wird.

10. Verfahren nach einem der vorhergehenden Ansprüche,
**dadurch gekennzeichnet**,
daß ein Klebeband (51) aufgebracht wird, das zusätzlich mindestens eine Verstärkungsauflage (51A) aufweist.

11. Verfahren nach Anspruch 10,
**dadurch gekennzeichnet**,
daß ein Klebeband (51) aufgebracht wird, dessen Verstärkungsauflage (51A) aus mehreren Fäden oder einem Gewebe besteht.

12. Verfahren nach einem der Ansprüche 10 oder 11,
**dadurch gekennzeichnet,**
daß ein Klebeband (51) aufgebracht wird, dessen Verstärkungsauflage (51A) eine Zugfestigkeit aufweist, die größer ist, als die des eigentlichen Klebebandes.

13. Verfahren nach einem der Ansprüche 10 bis 12,
**dadurch gekennzeichnet,**
daß ein Klebeband (51) aufgebracht wird, dessen Verstärkungsauflage (51A) nur einen Teil, vorzugsweise zwischen 70 und 10 %, insbesondere zwischen 10 und 20 %, der Breitseite des Klebebandes bedeckt.

14. Verfahren nach einem der Ansprüche 10 bis 13,
**dadurch gekennzeichnet**,
daß ein Klebeband (51) aufgebracht wird, dessen Verstärkungsauflage (51A) aus Rovings besteht.

15. Verfahren nach einem der Ansprüche 10 bis 14,
**dadurch gekennzeichnet**,
daß ein Klebeband (51) aufgebracht wird, dessen Verstärkungsauflage (51A) an der Breitseite des Bandes etwa mittig aufgebracht ist.

16. Verfahren nach einem der vorhergehenden Ansprüche,
**dadurch gekennzeichnet**,
daß ein Klebeband (61) aufgebracht wird, auf das eine Schutzschicht, insbesondere eine Bitumenschicht (61B) oder ein Schutzlack aufgebracht ist.

17. Verfahren nach einem der vorhergehenden Ansprüche,
**dadurch gekennzeichnet**,
daß ein Klebeband (61) aufgebracht wird, das mit einem dauerelastischen Klebstoff getränkt ist.

18. Verfahren nach einem der Ansprüche 10 bis 17,
**dadurch gekennzeichnet**,
daß ein Klebeband (61) so aufgebracht wird, daß dessen Verstärkungsauflage (51A, 61A) dem optischen Kabel zugekehrt ist.

19. Verfahren nach einem der vorhergehenden Ansprüche,
**dadurch gekennzeichnet,**
daß ein Klebeband (61) aufgebracht wird, bei dem als Klebstoff Polyisobutylen verwendet ist.

20. Verfahren nach einem der vorhergehenden Ansprüche,
**dadurch gekennzeichnet**,
daß ein Klebeband (51,61) aufgebracht wird, dessen Breite zwischen 5 und 12 mm, vorzugsweise zwischen 6 und 8 mm, gewählt ist.

21. Verfahren nach einem der vorhergehenden Ansprüche,
**dadurch gekennzeichnet**,
daß ein Band (51, 61) aufgebracht wird, dessen Dicke zwischen 0,05 und 1 mm, bevorzugt zwischen 0,1 und 0,2 mm, gewählt ist.

22. Hochspannungsfreileitung mit einem an mindestens einem Seil (2) angelaschten optischen Kabel (1),
**dadurch gekennzeichnet**,
daß das optische Kabel (1) durch Anlaschen mittels mindestens eines Klebebandes (5,6) an dem Seil (2) gehalten ist.

## Claims

1. Method of installing an optical waveguide cable (1) on a conductor (2) of a high-voltage overhead line with the aid of securing elements applied in a helical manner, characterized in that the optical waveguide cable (1) fitted on along a conductor (2) of the high-voltage overhead line is attached with the aid of at least one adhesive tape (5, 6), the adhesive tape (5, 6) being wrapped helically around the conductor (2) and the optical waveguide cable (1) with its adhesive side facing inwards by means of a winding machine.

2. Method according to Claim 1, characterized in that an adhesive tape (5, 6) is used which is self-adhesive.

3. Method according to one of the preceding claims, characterized in that an adhesive tape (5, 6) is used which has a fluoropolymer film or a polyvinyl fluoride film.

4. Method according to one of the preceding claims, characterized in that an adhesive tape (5, 6) is used which is coated with acrylate adhesive or with silicone adhesive.

5. Method according to one of the preceding claims, characterized in that an adhesive tape (5, 6) is used which has reinforcements, in particular glass-fibre and/or aramide-fibre reinforcements.

6. Method according to one of the preceding claims, characterized in that a fabric tape with a coating of adhesive material is used.

7. Method according to one of the preceding claims, characterized in that two adhesive tapes (5, 6) are wrapped around helically with crossover wrapping.

8. Method according to one of the preceding claims, characterized in that the adhesive tape (5, 6) is wrapped around helically with a wrapping length (S) of 250 to 500 mm.

9. Method according to one of the preceding claims, characterized in that the optical waveguide cable (1) is attached to the earthing cable (2) of a high-voltage overhead line.

10. Method according to one of the preceding claims, characterized in that an adhesive tape (51) is applied, which additionally has at least one reinforcing layer (51A).

11. Method according to Claim 10, characterized in that an adhesive tape (51) is applied, whose reinforcing layer (51A) consists of a plurality of threads or of a fabric.

12. Method according to one of Claims 10 or 11, characterized in that an adhesive tape (51) is applied, whose reinforcing layer (51A) has a tensile strength which is greater than that of the actual adhesive tape.

13. Method according to one of Claims 10 to 12, characterized in that an adhesive tape (51) is applied, whose reinforcing layer (51A) covers only a part, preferably between 70 and 10%, in particular between 10 and 20%, of the broad side of the adhesive tape.

14. Method according to one of Claims 10 to 13, characterized in that an adhesive tape (51) is applied, whose reinforcing layer (51A) consists of rovings.

15. Method according to one of Claims 10 to 14, characterized in that an adhesive tape (51) is applied, whose reinforcing layer (51A) is applied approximately centrally to the broad side of the tape.

16. Method according to one of the preceding claims, characterized in that an adhesive tape (61) is applied, onto which a protective layer, in particular a bitumen layer (61B) or a protective lacquer, is applied.

17. Method according to one of the preceding claims, characterized in that an adhesive tape (61) is applied, which is impregnated with a permanently elastic adhesive.

18. Method according to one of Claims 10 to 17, characterized in that an adhesive tape (61) is applied in such a way that its reinforcing layer (51A, 61A) faces the optical cable.

19. Method according to one of the preceding claims, characterized in that an adhesive tape (61) is applied, in which polyisobutylene is used as adhesive.

20. Method according to one of the preceding claims, characterized in that an adhesive tape (51, 61) is applied, whose width is selected to be between 5 and 12 mm, preferably between 6 and 8 mm.

21. Method according to one of the preceding claims, characterized in that an adhesive tape (51, 61) is applied, whose thickness is selected to be between 0.05 and 1 mm, preferably between 0.1 and 0.2 mm.

22. High-voltage overhead line having an optical cable (1) attached to at least one conductor (2), characterized in that the optical cable (1) is held on the conductor (2) by attaching it by means of at least one adhesive tape (5,6).

## Revendications

1. Procédé pour monter un câble à guides d'ondes lumineuses (1) sur un câble (2) d'une ligne aérienne à haute tension à l'aide d'éléments de fixation à allure hélicoïdale
**caractérisé par le fait**
que le câble à guides d'ondes lumineuses (1) tendu le long d'un câble (2) de la ligne aérienne à haute tension est fixé à l'aide d'au moins un ruban adhésif (5, 6), le ruban adhésif (5, 6) étant appliqué par une enrouleuse d'une façon hélicoïdale autour du câble de la ligne à haute tension (2) et du câble à guides d'ondes lumineuses (1), le côté adhésif du ruban étant tourné vers l'intérieur.

2. Procédé selon la revendication 1
**caractérisé par le fait**
qu'on utilise un ruban autoadhésif (5, 6).

3. Procédé selon une des revendications précédentes
**caractérisé par le fait**
qu'on utilise un ruban adhésif (5, 6) comportant un film en fluoropolymère ou en fluorure de polyvinyle.

4. Procédé selon une des revendications précédentes
**caractérisé par le fait**
qu'on utilise un ruban adhésif (5, 6) recouvert d'une couche de colle acrylate ou de colle silicone.

5. Procédé selon une des revendications précédentes
**caractérisé par le fait**
qu'on utilise un ruban adhésif (5, 6) comportant des renforts, en particulier des renforts en fibres de verre et / ou en fibres d'aramide.

6. Procédé selon une des revendications précédentes
**caractérisé par le fait**
qu'on utilise un ruban textile recouvert d'une couche d'un produit adhésif.

7. Procédé selon une des revendications précédentes
**caractérisé par le fait**
qu'on utilise deux rubans adhésifs (5, 6) disposés d'une façon hélicoïdale avec croisement des bandes.

8. Procédé selon une des revendications précédentes
**caractérisé par le fait**
que le ruban adhésif (5, 6) est appliqué avec un pas (S) de 250 à 500 mm.

9. Procédé selon une des revendications précédentes
**caractérisé par le fait**
que le câble à guides d'ondes lumineuses (1) est fixé sur le câble de terre (2) d'une ligne aérienne à haute tension.

10. Procédé selon une des revendications précédentes
**caractérisé par le fait**
qu'on applique un ruban adhésif (51) comportant en plus au moins une couche de renfort (51A).

11. Procédé selon la revendication 10
**caractérisé par le fait**
qu'on applique un ruban adhésif (51) dont la couche de renfort (51A) est constituée par plusieurs fibres ou par un ruban textile.

12. Procédé selon l'une des revendications 10 ou 11
**caractérisé par le fait**
qu'on applique un ruban adhésif (51) dont la couche de renfort (51A) a une résistance à la traction supérieure à celle du ruban adhésif proprement dit.

13. Procédé selon l'une des revendications 10 à 12
**caractérisé par le fait**
qu'on applique un ruban adhésif (51) dont la couche de renfort (51A) ne recouvre qu'une partie, de préférence entre 70 et 10 %, particulièrement entre 10 et 20 %, de la largeur du ruban adhésif.

14. Procédé selon l'une des revendications 10 à 13
**caractérisé par le fait**
qu'on applique un ruban adhésif (51) dont la couche de renfort (51A) est constituée de stratifils de verre textile.

15. Procédé selon l'une des revendications 10 à 14
**caractérisé par le fait**
qu'on applique un ruban adhésif (51) dont la couche de renfort (51A) est appliquée environ au milieu du ruban dans le sens de sa largeur.

16. Procédé selon l'une des revendications précédentes
**caractérisé par le fait**
qu'on applique un ruban adhésif (61) recouvert d'une couche de protection, en particulier d'une couche de bitume (61B) ou d'un vernis de protection.

17. Procédé selon l'une des revendications précédentes
**caractérisé par le fait**
qu'on applique un ruban adhésif (61) imprégné d'une colle à élasticité permanente.

18. Procédé selon l'une des revendications précédentes
**caractérisé par le fait**
qu'on applique un ruban adhésif (61) de telle sorte que sa couche de renfort (51A, 61A) est toumée vers le câble à fibres optiques.

19. Procédé selon l'une des revendications précédentes
**caractérisé par le fait**
qu'on applique un ruban adhésif (61) pour lequel on utilise du polyisobutylène comme produit adhésif.

20. Procédé selon l'une des revendications précédentes
**caractérisé par le fait**
qu'on applique un ruban adhésif (51, 61) dont la largeur est choisie entre 5 et 12 mm, de préférence entre 6 et 8 mm.

21. Procédé selon l'une des revendications précédentes
**caractérisé par le fait**
qu'on applique un ruban (51, 61) dont l'épaisseur est choisie entre 0,05 et 1 mm, de préférence entre 0,1 et 0,2 mm.

22. Ligne aérienne à haute tension avec un câble à fibres optiques (1) fixé à au moins un câble de la ligne à haute tension (2)
**caractérisée par le fait**
que le câble à fibres optiques (1) est maintenu sur le câble de la ligne à haute tension (2) au moyen d'au moins un ruban adhésif (5, 6).
